Europäisches Patentamt

(19) European Patent Office (11) Publication number: **0 198 539**
**B1**
Office européen des brevets

(12) **EUROPEAN PATENT SPECIFICATION**

(45) Date of publication of the patent specification: (51) Int. Cl.⁴: **F25B 49/00**, F25B 15/02,
15.11.89 F25B 41/06

(21) Application number: 86200568.3

(22) Date of filing: 03.04.86

(54) **Method of operating an absorption heat pump or refrigerator, and an absorption heat pump or refrigerator.**

(30) Priority: 09.04.85 NL 8501039

(43) Date of publication of application:
22.10.86 Bulletin 86/43

(45) Publication of the grant of the patent:
15.11.89 Bulletin 89/46

(84) Designated Contracting States:
AT BE CH DE FR GB IT LI LU NL SE

(56) References cited:
EP-A- 0 039 545
WO-A-82/03266
DE-A- 2 854 055
DE-A- 3 427 763
DE-B- 1 018 439
FR-A- 2 539 855
GB-A- 2 002 505
US-A- 4 270 365

PATENTS ABSTRACTS OF JAPAN; vol. 7,
no. 137 (M-222) [1282], 15th June 1983; & JP - A
- 58 52 998 (CHIYODA KAKO KENSETSU) 29-03-1983
BWK BRENNSTOFF-WÄRME-KRAFT, vol. 34, no. 1,
January 1982, pages 26-31, DUSSELDORF, DE; J.
KAPPEL et al.: "EDV-Gestützte Auslegung und
Optimierung von Absorptionswärmepumpen."

(73) Proprietor: **NEDERLANDSE ORGANISATIE VOOR
TOEGEPAST-NATUURWETENSCHAPPELIJK
ONDERZOEK TNO, Juliana van Stolberglaan 148,
NL-2595 CL The Hague(NL)**

(72) Inventor: **Gelderloos, Pouwel Jelte, Marten
Orgeslaan 46, 7339 HS Ugchelen(NL)**

(74) Representative: **van der Beek, George Frans, Ir. et al,
Nederlandsch Octrooibureau Scheveningseweg 82 P.O.
Box 29720, NL-2502 LS 's-Gravenhage(NL)**

## Description

The invention relates to a method of operating an absorption heat pump or refrigerator, consisting at least of a refrigerant circuit and a refrigerant-containing solution circuit, with a generator for evaporating refrigerant from the solution with the supply of relatively high-temperature heat, a condenser for condensing refrigerant and giving up heat at an intermediate temperature level, an evaporator for evaporating refrigerant with the absorption of heat from a relatively cold heat source, a heat exchanger for transferring heat from the liquid passing out of the condenser to the refrigerant vapour and liquid coming from the evaporator, an absorber for absorbing refrigerant vapour into the solution with the giving-up of heat at an intermediate temperature level, and means for circulating the solution or maintaining the pressure.

A method of this kind is known from Plank, R., "Handbuch der Kältetechnik" (1959), Part VII, particularly pages 10 to 19. In the apparatus described there a heat exchanger, also referred to as an after-cooler, after-evaporator, or liquid cooler, can be included, in which condensate coming from the condenser is cooled by heating vapour and evaporating any entrained liquid. The action of this heat exchanger is described on page 13 and on pages 182 to 188 in the work referred to above. In an apparatus of the type first described above it is desired to achieve optimising regulation of the refrigerant delivery ($D_{exp}$) via a throttle means to the evaporator in order to increase the power of the apparatus. In the case of a heat pump this power is the power output for a constant generator power, and in the case of a refrigerator the evaporator power (refrigerating power) for a constant generator power.

European patent application 0 039 545 discloses an absorption cycle heat pump including a generator containing a refrigerant and a solvent for the refrigerant and to which, in use, an external source of heat is applied to raise the temperature thereof such that a vapour rich in the refrigerant is expelled from the generator. A condenser is connected to the generator so as to receive and condense the vapour expelled from the generator in use, and an evaporator is connected to the condenser through a heat exchanger and valve means arranged to re-evaporate the condensed vapour into the evaporator, and an absorber, connected through the heat exchanger to the evaporator; the absorber and the generator forming part of a series circuit through which, in use, a liquid rich in the solvent flows from the generator to the absorber for recombination with the fluid from the evaporator, and a pump in the series circuit for returning the recombined refrigerant and solvent from the absorber to the generator, wherein the normal boiling points difference of the refrigerant and the solvent is less than or equal to 200°C and the pump is adapted to operate so that

a) evaporation of said condensed vapour into the evaporator is incomplete and the fluid leaving the evaporator contains 5 to 30% by mass of liquid, and

b) the refrigerant liquid in the fluid flowing from the evaporator is evaporated in said heat exchanger so that the fluid leaving the heat exchanger is at between a maximum superheat of 2°C and a flash ratio of 2%.

The application further mentions specific, prescribed process conditions (temperatures, pressures, Δt's) and a certain capacity.

Further details of the substance vapour circuit are emphasized; however, the control of the extension valve is not discussed.

It has now been found that the refrigerating power of the apparatus can be increased by applying a method of the type first described above, which is characterized in the inlet and outlet temperatures of the heat exchanger are measured and the refrigerant flow towards the evaporator is controlled as a function of these temperatures in such a manner that the temperature differential $\Delta t_w$ between the liquid entering the heat exchanger on the condenser side ($t_1$) and the liquid and vapour leaving the heat exchanger on the absorber side ($t_4$) substantially coincides with the temperature differential $\Delta t_k$ between the liquid passing out of the heat exchanger on the evaporator side ($t_2$) and the liquid and vapour entering the heat exchanger on the evaporator side ($t_3$).

This regulation will be referred to hereinbelow as four-temperature control. According to the four-temperature control of the method of the invention the heat ratio of the heat pump, that is to say the quotient of the power output and the power supplied to the generator, or the refrigeration factor of the refrigerator, that is to say the quotient of the power received in the evaporator and the power supplied to the generator, is substantially increased, particularly if the temperature of one or more of the heat sources and/or the (various) output temperatures vary considerably. For this purpose delivery of refrigerant flow towards the evaporation is controlled in such a manner that the difference ($\Delta\Delta t$) between $\Delta t_w$ (= $t_1$ –$t_4$) and $\Delta t_k$ (= $t_2$ –$t_3$) preferably amounts to about 0, and in particular at most amounts to plus or minus 10 K.

In the present description the expression "heat source" is to be understood to mean any medium from which heat can be taken, for example air, earth, water (either flowing or still), foodstuffs.

In order to enable the heat pump or refrigerator to work in a stable manner, the delivery or refrigerant is preferably also made dependent on the difference ($\Delta t$) between the temperature of the heat source ($t_b1$) and that of the evaporator ($t_o$) in such a way that the controller maintains this difference $\Delta t$ at a setpoint that can be varied in response to the difference $\Delta\Delta t$. It is preferable to apply the four-temperature control in cascade with control on the basis of $t_b$–$t_o$, so that the desired value of the latter is optimized. When the heat source is air and the evaporator temperature is lower than 0°C, it is advantageous that the moment of the commencement of the defrosting of the frost accumulating on the evaporator is adjusted on the basis of $\Delta t$ (=$t_b$–$t_o$)

or $\Delta\Delta$ t, $(=t_1-t_4) - (t_2-t_3) = \Delta$ $t_w-\Delta$ $t_k$) reaching certain limits.

The present invention is different from the absorption cycle heat pump disclosed in European patent application 0 039 545 in that it emphasizes the control of the process and wherein the essential detail specified is $\Delta\Delta t$.

The invention also relates to an absorption heat pump or refrigerator which consists at least of a refrigerant circuit and a refrigerant-containing solution circuit, with a generator for evaporating refrigerant from the solution with the supply of heat at a relatively high temperature, a condenser for condensing refrigerant and giving up heat at an intermediate temperature level, an evaporator for evaporating refrigerant with the absorption of heat from a relatively cold heat source, a heat exchanger for transferring heat from the liquid passing out of the condenser to the refrigerant vapour and liquid coming from the evaporator, an absorber for absorbing refrigerant vapour into the solution with the giving-up of heat at an intermediate temperature level, and means for circulating the solution or maintaining the pressure, which heat pump or refrigerator is characterized in that at the inlets and outlets respectively of the heat exchanger there are disposed, in or on the four pipes or members connected thereto, temperature sensors which are connected via a controlling means to a control valve (throttle means), whereby the supply of the refrigerant to the evaporator is controlled, in the manner indicated in Claim 6.

The invention further relates to an apparatus of the above described type, in which there are disposed both at the site of the heat source and in the evaporator, or close thereto, temperature sensors which are connected via a controlling means to the control valve controlling the supply to the evaporator. This control with the aid of temperature sensors at the site of the heat source and in or near the evaporator is preferably connected in cascade with the control with the aid of four temperature sensors at the site of the inlets and outlets of the heat exchanger, the latter control optimizing the desired value of the former.

For an effective action of the four-temperature control according to the invention it is desirable for the liquid side of the heat exchanger to be continuously completely filled with liquid.

The invention is explained more fully below with reference to the accompanying drawings.

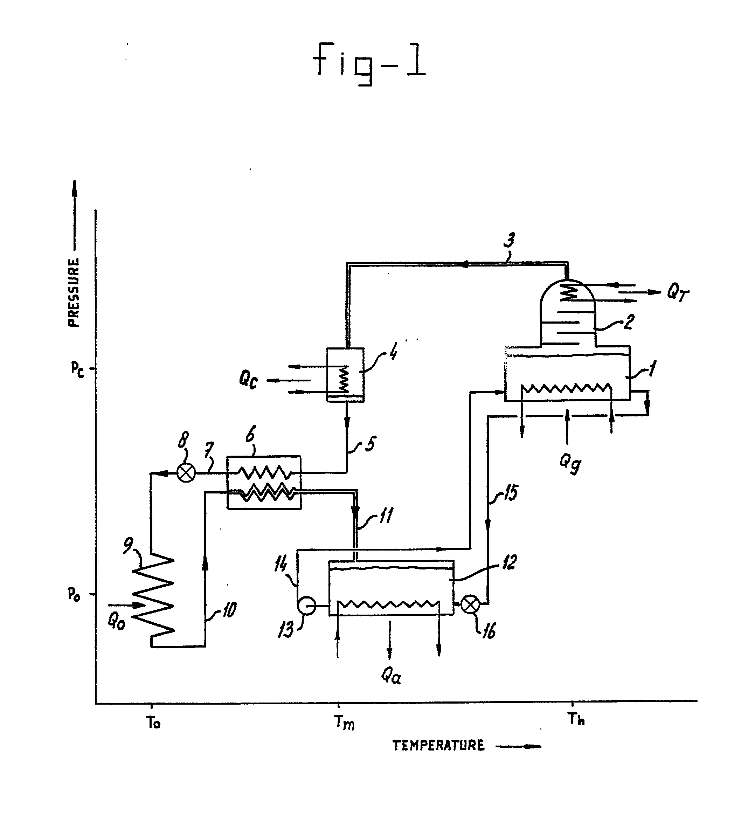

Figure 1 shows schematically a continuously acting absorption heat pump which can be operated in accordance with the invention. The components are as far far as possible set out in a p-T diagram, which clearly shows where the pressure or temperature is relatively high or low. In a generator 1 refrigerant is driven out of the solution of refrigerant and solvent by the supply of heat Qg. The generator 1 may be provided with a rectifier (2) in which the refrigerant vapour is freed from at last a part of the likewise evaporated solvent and the heat $Q_T$ released is discharged. The refrigerant vapour is passed via a pipe 3 to a condenser 4, in which the vapour condenses and the heat $Q_C$ is discharged. The liquid coming from the condenser 4 is passed via a pipe 5 to a heat exchanger 6, and the cooled liquid leaves the heat exchanger 6 via a pipe 7. The heat exchanger 6 is also known as an afterevaporator, liquid cooler, or aftercooler. In the pipe 7 a throttle means 8 for an evaporator 9 is disposed. The refrigerant liquid at least partly evaporates in the evaporator 9 and takes up heat from the heat source $(Q_o)$. The liquid-vapour mixture leaves the evaporator 9 via a pipe 10 and passes into the heat exchanger 6, which is connected by a pipe 11 to an absorber 12. In this absorber the refrigerant is absorbed, with the giving-up of heat $Q_a$, into the solution, which is supplied via a pipe 15 from the generator 1. A throttle means 16 is disposed in the pipe 15. With the aid of a solution pump 13 the solution is passed via a pipe 14 to the generator 1.

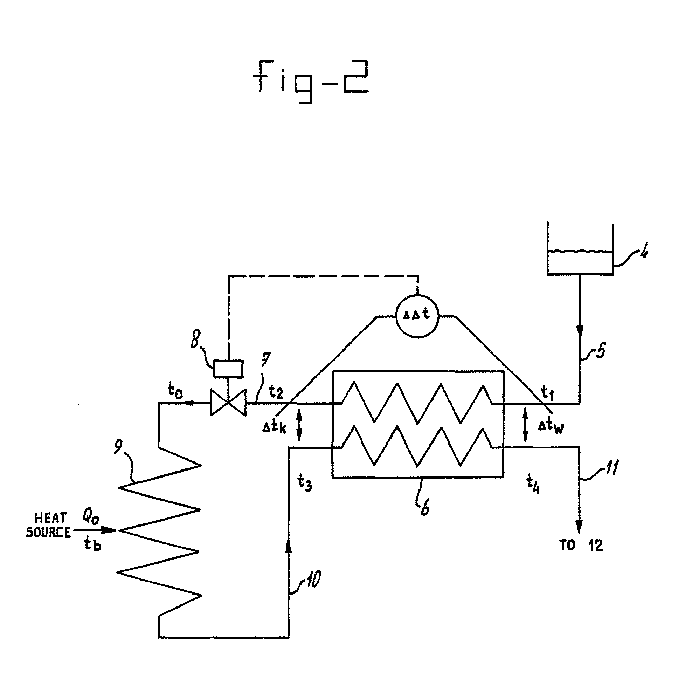

Figure 2 shows on a larger scale a part of the apparatus shown in Figure 1. In this Figure, $\Delta t_k$ and $\Delta t_w$ represent the differences between $t_2$ and $t_3$ and between $t_1$ and $t_4$ respectively. $\Delta\Delta$ t is the difference between $\Delta$ $t_w$ and $\Delta$ $t_k$, and surprisingly is an extremely suitable signal for optimum regulation of the evaporator.

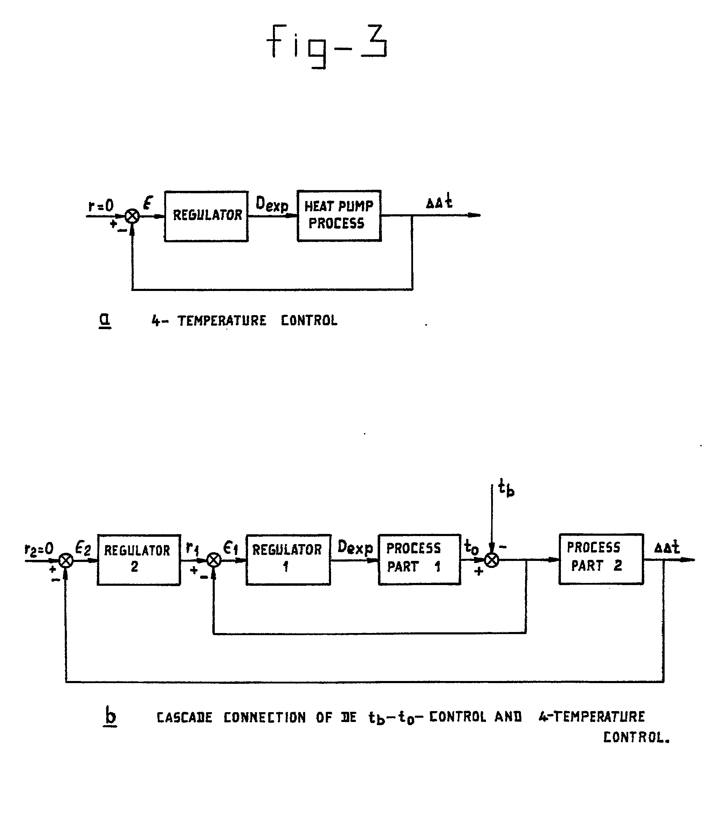

Figures 3a and 3b are block diagrams of the regulation procedures which can be applied in accordance with the invention. The symbols used here, insofar as they have not previously been explained, have the following meanings:
r value adjusted.
c difference between value measured and value adjusted.

The apparatus according to the invention can be operated with pairs of substances customarily used in apparatus of this kind, for example ammonia and water. The refrigerant need not be completely pure and may still contain a small amount of solvent. According to the present invention the evaporator used is a continuous-flow evaporator, for example a coil evaporator, from which any unevaporated refrigerant is entrained by the current of vapour.

The application of the principle according to the invention is not restricted to the apparatus shown in Figure 1, and it can be applied in an absorption heat pump or absorption refrigerator of any type.

## Claims

1. Method of operating an absorption heat pump or refrigerator, consisting at least of a refrigerant circuit and a refrigerant-containing solution circuit, with a generator for evaporating refrigerant from the solution with the supply of relatively high-temperature heat, a condenser for condensing refrigerant and giving up heat at an intermediate temperature level, an evaporator for evaporating refrigerant with the absorption of heat from a relatively cold heat source, a heat exchanger for transferring heat from the liquid passing out of the condenser into the refrigerant vapour and liquid coming from the evaporator, an absorber for absorbing refrigerant vapour into the solution with the giving-up of heat at an intermediate temperature level, and means for circulating the solution or maintaining the pressure, characterized in that the inlet and outlet temperatures of the heat exchanger are measured and the refrigerant flow towards the evaporator is controlled as a function of these temperatures in such a manner that the temperature differential $\Delta\ t_w$ between the liquid entering the heat exchanger on the condenser side ($t_1$) and the liquid and vapour leaving the heat exchanger on the absorber side ($t_4$) substantially coincides with the temperature differential $\Delta\ t_k$ between the liquid between the liquid passing out of the heat exchanger on the evaporator side ($t_2$) and the liquid and vapour entering the heat exchanger on the evaporator side ($t_3$).

2. Method according to claim 1, characterized in that the delivery of refrigerant flow towards the evaporator is controlled in such a manner that the difference ($\Delta\Delta$ t) between $t_1$–$t_4$ and $t_2$–$t_3$ amounts to approximately 0 and at most to plus or minus 10 K.

3. Method according to claim 1 or 2, characterized in that the regulation of the delivery of refrigerant is also made dependent on the difference ($\Delta$ t) between the temperature of the heat source ($t_b$) and that of the evaporator ($t_o$) in such a way that this difference $\Delta$ t is maintained at a setpoint that can be varied in response to the difference $\Delta\Delta$ t = ($t_1$–$t_4$) – ($t_2$–$t_3$).

4. Method according to claims 1 to 3, characterized in that the moment of the commencement of the defrosting is adjusted on the basis of $\Delta$ t (= $t_b$–$t_o$) or $\Delta\Delta$ t (= $t_1$–$t_4$) – ($t_2$–$t_3$) = $\Delta\ t_w$–$\Delta\ t_k$) reaching certain limits.

5. Method according to claims 1 to 4, characterized in that the liquid side of the heat exchanger is kept continuously completely filled with liquid.

6. Absorption heat pump or refrigerator which consists at least of a refrigerant circuit and a refrigerant-containing solution circuit, with a generator for evaporating refrigerant from the solution with the supply of heat at a relatively high temperature, a condenser for condensing refrigerant and giving up heat at an intermediate temperature level, an evaporator for evaporating refrigerant with the absorption of heat from a relatively cold heat source, a heat exchanger for transferring heat from the liquid passing out of the condenser to the refrigerant vapour and liquid coming from the evaporator, an absorber for absorbing refrigerant vapour into the solution with the giving-up of heat at an intermediate temperature level, and means for circulating the solution or maintaining the pressure, characterized in that at the inlets and outlets respectively of the heat exchanger there are disposed, in or on the four pipes or members connected thereto, temperature sensors which are connected via a controlling means to a control valve, and that the controlling means is adapted to control the supply of refrigerant to the evaporator in such a manner that the temperature differential $\Delta t_w$ between the liquid entering the heat exchanger on the condenser side ($t_1$) and the liquid and vapour leaving the heat exchanger on the absorber side ($t_4$) substantially coincides with the temperature differential $\Delta t_k$ between the liquid passing out of the heat exchanger on the evaporator side ($t_2$) and the liquid and vapour entering the heat exchanger on the evaporator side ($t_3$).

7. Absorption heat pump or refrigerator according to claim 6, characterized in that there are disposed both at the site of the heat source and in the evaporator, or close thereto, temperature sensors which are connected via a controlling means to the control valve which controlls the supply to the evaporator.

8. Absorption heat pump or refrigerator according to claim 7, characterized in that the regulation by means of temperature sensors at the site of the heat source and in or near the evaporator is connected in cascade with the control by means of four temperature sensors in or on the pipes or the members connected thereto in the heat exchanger.

## Revendications

1. Procédé pour faire fonctionner une pompe à chaleur ou un réfrigérateur à absorption, qui est constitué au moins d'un circuit de réfrigérant et d'un circuit de solution contenant le réfrigérant, avec un générateur pour évaporer le réfrigérant à partir de la solution par apport de chaleur à température relativement élevée, un condenseur pour condenser le réfrigérant et pour dégager de la chaleur à un niveau de température intermédiaire, un évaporateur pour évaporer le réfrigérant par absorption de chaleur provenant d'une source relativement froide de chaleur, un échangeur de chaleur pour transférer de la chaleur, du liquide quittant le condenseur à la vapeur de réfrigérant et au liquide venant de l'évaporateur, un absorbeur pour absorber la vapeur de réfrigérant dans la solution avec le dégagement de chaleur à un niveau de température intermédiaire, et des moyens pour faire circuler la solution ou maintenir la pression, caractérisé en ce que les températures d'entrée et de sortie de l'échangeur de chaleur sont mesurées et que le débit du réfrigérant vers l'évaporateur est réglé en fonction de ces températures de telle manière que la différence de température $\Delta t_w$ entre le liquide pénétrant dans l'échangeur de chaleur sur le côté du condenseur ($t_1$) et le liquide et la vapeur quittant l'échangeur de chaleur du côté de l'absorbeur ($t_4$) coïncide sensiblement avec la différence de température $\Delta t_k$ entre le liquide sortant de l'échangeur de chaleur sur le côté de l'évaporateur ($t_2$) et le liquide et la vapeur entrant dans l'échangeur de chaleur sur le côté de l'évaporateur ($t_3$).

2. Procédé selon la revendication 1, caractérisé en ce que le débit du réfrigérant vers l'évaporateur est réglé de telle manière que la différence ($\Delta\Delta t$) entre $t_1$–$t_4$ et $t_2$–$t_3$ soit égale à 0 approximativement et, au plus, à plus ou moins 10 K.

3. Procédé selon la revendication 1 ou 2, caractérisé en ce que le réglage du débit du réfrigérant est aussi rendu dépendant de la différence ($\Delta t$) entre la température de la source de chaleur ($t_b$) et celle de l'évaporateur ($t_o$) de telle manière que cette différence de température soit maintenue à une valeur de consigne que l'on peut faire varier en fonction de la différence $\Delta\Delta t = (t_1-t_4)-(t_2 - t_3.)$

4. Procédé selon les revendications 1 à 3, caractérisé en ce que l'instant où commence le dégivrage est ajusté sur la base de $\Delta t$ (= $t_b-t_o$) ou de $\Delta\Delta t (=(t_1-t_4) - (t_2-t_3) = \Delta t_w-\Delta t_k)$ atteignant certaines limites.

5. Procédé selon les revendications 1 à 4, caractérisé en ce que le côté liquide de l'échangeur de chaleur est en permanence maintenu complètement rempli de liquide.

6. Pompe à chaleur ou réfrigérateur à absorption, qui est constitué au moins d'un circuit de réfrigérant et d'un circuit de solution contenant le réfrigérant, avec un générateur pour évaporer le réfrigérant à partir de la solution par apport de chaleur à température relativement élevée, un condenseur pour condenser le réfrigérant et pour dégager de la chaleur à un niveau de température intermédiaire, un évaporateur pour évaporer le réfrigérant par absorption de chaleur provenant d'une source relativement froide de chaleur, un échangeur de chaleur pour transférer de la chaleur, du liquide quittant le condenseur à la vapeur de réfrigérant et au liquide venant de l'évaporateur, un absorbeur pour absorber la vapeur de réfrigérant dans la solution avec le dégagement de chaleur à un niveau de température intermédiaire, et des moyens pour faire circuler la solution ou maintenir la pression, caractérisé en ce qu'aux entrées et sorties de l'échangeur de chaleur sont disposés respectivement, dans ou sur les quatre tuyaux ou éléments reliés à ceux-ci, des capteurs de température qui sont reliés à une vanne de réglage par l'intermédiaire d'un moyen de commande et en ce que le moyen de commande est agencé de façon à régler le débit du réfrigérant vers l'évaporateur de telle manière que la différence de température $\Delta t_w$ entre le liquide pénétrant dans l'échangeur de chaleur sur le côté du condenseur ($t_1$) et le liquide et la vapeur quittant l'échangeur de chaleur du côté de l'absorbeur ($t_4$) coïncide sensiblement avec la différence de température $\Delta t_k$ entre le liquide sortant de l'échangeur de chaleur sur le côté de l'évaporateur ($t_2$) et le liquide et la vapeur entrant dans l'échangeur de chaleur sur le côté de l'évaporateur ($t_3$).

7. Pompe à chaleur ou réfrigérateur à absorption selon la revendication 6, caractérisé en ce que des capteurs de température, reliés par l'intermédiaire d'un moyen de commande à la vanne de réglage qui règle le débit vers l'évaporateur, sont disposés à la fois à l'emplacement de la source de chaleur et dans l'évaporateur ou à proximité de celui-ci.

8. Pompe à chaleur ou réfrigérateur à absorption selon la revendication 7, caractérisé en ce que le réglage à l'aide des capteurs de température disposés à l'emplacement de la source de chaleur et dans ou près de l'évaporateur est monté en cascade avec la commande fonctionnant à l'aide des quatre capteurs de température disposés dans ou sur les tuyaux ou éléments reliés à ceux-ci dans l'échangeur de chaleur.

**Patentansprüche**

1. Verfahren zum Betreiben einer Wärmeabsorptionspumpe oder einer Kältemaschine, bestehend aus wenigstens einem Kühlmittelkreis und einem Kühlmittel enthaltenden Lösungsmittelkreis, mit einem Generator zum Verdampfen von Kühlmittel aus der Lösung mittels Zuführung einer Wärme mit relativ hoher Temperatur, einem Kondensator zum Kondensieren des Kühlmittels und Abgeben von Wärme mit einem mittleren Temperaturniveau, einem Verdampfer zum Verdampfen von Kühlmittel mittels der Absorption von Wärme von einer relativ kalten Wärmequelle, einem Wärmetauscher zur Wärmeübertragung von der den Kondensor verlassenden Flüssigkeit auf den Kühlmitteldampf und die aus dem Verdampfer kommende Flüssigkeit, einem Absorber zum Absorbieren von Kühlmitteldampf in die Lösung unter Abgeben von Wärme mit einem mittleren Temperaturniveau, und Mitteln zum Zirkulieren der Lösung oder Aufrechterhalten des Drucks, dadurch gekennzeichnet, daß die Eingangs- und Ausgangstemperaturen des Wärmetauschers gemessen werden und der Kühlmittelfluß zum Verdampfer als Funktion dieser Temperatur so gesteuert wird, daß das Temperaturdifferential $\Delta t_w$ zwischen der in den Wärmeaustauscher auf der Kondensorseite eintretenden Flüssigkeit ($t_1$) und dem den Wärmetauscher auf der Absorberseite verlassenden Dampf ($t_4$) im wesentlichen mit dem Temperaturdifferential $\Delta t_x$ zwischen der den Wärmetauscher auf der Verdampferseite verlassenden Flüssigkeit ($t_2$) und der auf der Verdampferseite in den Wärmetauscher eintretenden Flüssigkeit und Dampf ($t_3$) übereinstimmt.

2. Verfahren nach Anspruch 1, dadurch gekennzeichnet, daß die Lieferung des Kühlmittelstroms zum Verdampfer so gesteuert ist, daß die Differenz ($\Delta\Delta t$) zwischen $t_1-t_4$ und $t_2-t_3$ ungefähr gegen 0 geht und maximal plus oder minus 10 K beträgt.

3. Verfahren nach Anspruch 1 oder 2, dadurch gekennzeichnet, daß die Regelung des Zulieferns von Kühlmittel außerdem von der Differenz ($\Delta t$) zwischen der Temperatur der Wärmequelle ($t_b$) und der Temperatur des Verdampfers ($t_o$) so abhängig gestaltet ist, daß diese Differenz $\Delta t$ auf einem Einstellwert gehalten wird, der in Abhängigkeit von der Differenz $\Delta\Delta t_1 = (t_1 - t_4) - (t_2 - t_3)$ variiert werden kann.

4. Verfahren nach den Ansprüchen 1 bis 3, dadurch gekennzeichnet, daß der Moment des Anfangens der Entfrostung auf der Basis von $\Delta t$ (= $t_b - t_o$) oder $\Delta\Delta t$ (=$t_1 - t_4$) - ($t_2 - t_3$) = $\Delta t_w - \Delta t_x$) auf das Erreichen gewisser Grenzen eingestellt worden ist.

5. Verfahren nach den Ansprüchen 1 bis 4, dadurch gekennzeichnet, daß die Flüssigkeitsseite des Wärmetauschers fortlaufend vollständig mit Flüssigkeit gefüllt gehalten wird.

6. Wärmeabsorptionspumpe oder Kältemaschine bestehend aus wenigstens einem Kühlmittelkreis und einem Kühlmittel enthaltenden Lösungsmittelkreis, mit einem Generator zum Verdampfen von Kühlmittel aus der Lösung mittels Zuführung von Wärme mit einer relativ hohen Temperatur, einem Kondensor zum Kondensieren von Kühlmittel und Abgeben von Wärme auf einem mittleren Temperaturniveau; einem Verdampfer zum Verdampfen von Kühlmittel mittels Absorption von Wärme von einer relativ kalten Wärmequelle, einem Wärmetauscher zum Übertragen von Wärme von der den Kondensor verlassenden Flüssigkeit auf den Kühlmitteldampf und die Flüssigkeit, die vom Verdampfer kommen, einem Absorber zum Absorbieren von Kühlmitteldampf in die Lösung unter Abgabe von Wärme mit einem mittleren Temperaturniveau, und Mitteln zum Zirkulieren der Lösung oder Aufrechterhalten des Druckes, dadurch gekennzeichnet, daß jeweils an den Eingängen und Ausgängen des Wärmetauschers in oder an den dort angeschlossenen vier Leitungen oder Elementen Temperatursensoren angeordnet sind, die über Steuerungsmittel mit einem Steuerungsventil verbunden sind, und daß die Steuerungsmittel die Versorgung des Verdampfers mit Kühlmittel so steuern, daß das Temperaturdifferential $\Delta t_w$ zwischen der auf der Kondensorseite in den Wärmetauscher eintretenden Flüssigkeit ($t_l$) und der Flüssigkeit und den Dampf ($t_4$), die den Wärmetauscher auf der Absorberseite verlassen, im wesentlichen mit dem Temperaturdifferential $\Delta t_k$ zwischen der den Wärmetauscher auf der Verdampferseite verlassenden Flüssigkeit ($t_2$) und der auf der Verdampferseite in den Wärmetauscher eintretenden Flüssigkeit und Dampf ($t_3$), übereinstimmt.

7. Wärmeabsorptionspumpe oder Kältemaschine nach Anspruch 6, dadurch gekennzeichnet, daß sowohl am Ort der Wärmequelle als auch des Verdampfers oder nahe derselben Temperatursensoren angeordnet sind, die über Steuerungsmittel mit dem Steuerungsventil verbunden sind, welches die Zufuhr zum Verdampfer steuert.

8. Wärmeabsorptionspumpe oder Kältemaschine nach Anspruch 7, dadurch gekennzeichnet, daß die Steuerung mittels Temperatursensoren am Ort der Wärmequelle und in oder in der Nähe des Verdampfers kaskadenförmig zur Steuerung mittels der vier Temperatursensoren in oder an den Leitungen oder Elementen, die am Wärmetauscher angeschlossen sind, geschaltet ist.

# fig-1

# Fig-2

# Fig-3

**a** 4- TEMPERATURE CONTROL

**b** CASCADE CONNECTION OF DE $t_b-t_o-$ CONTROL AND 4-TEMPERATURE CONTROL.